Europäisches Patentamt

European Patent Office

Office européen des brevets

(11) Veröffentlichungsnummer: **0 085 412**
**A2**

(12) **EUROPÄISCHE PATENTANMELDUNG**

(21) Anmeldenummer: 83100803.2

(22) Anmeldetag: 28.01.83

(51) Int. Cl.³: **G 03 B 15/03**
**F 21 L 15/06**

(30) Priorität: 30.01.82 DE 8202358 U

(43) Veröffentlichungstag der Anmeldung:
10.08.83 Patentblatt 83/32

(84) Benannte Vertragsstaaten:
BE DE FR GB IT NL

(71) Anmelder: REFLECTA GMBH FOTO FILM PROJEKTION
Berlichingenstrasse 9
D-8540 Schwabach(DE)

(72) Erfinder: Weinberg, Uli
An der Gredl 6
D-8542 Roth(DE)

(74) Vertreter: LOUIS, PÖHLAU, LOHRENTZ & SEGETH
Kesslerplatz 1
D-8500 Nürnberg(DE)

(54) Handleuchte für Film-, Foto- oder Videozwecke.

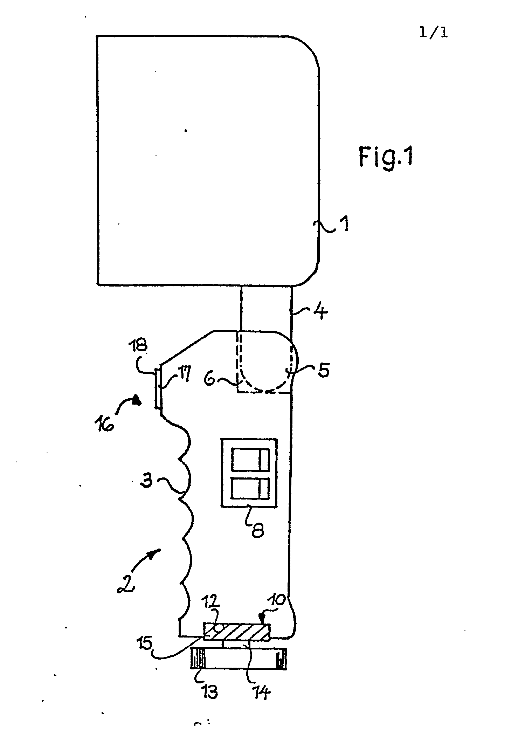

(57) Eine Handleuchte für Film-, Foto- oder Videozwecke, mit einem Leuchtengehäuse (1) und mit einem Handgriff (2), der an dem Leuchtengehäuse (1) zwischen einer ersten Schwenkstellung, in der die Strahlachse des Leuchtengehäuses (1) annähernd senkrecht zur Handgrifflängsachse steht, und einer zweiten Schwenkstellung, in der die Strahlachse annähernd parallel zur Handgrifflängsachse und vom Handgriff (2) weg gerichtet ist, gelenkig einstellbar ist. Außerdem weist der Handgriff (2) an seinem freien Ende eine Befestigungsvorrichtung (12, 13, 14) zur Befestigung der Handleuchte an einer Halteschiene (15) od.dgl. in einer bestimmten Winkelstellung zwischen Handgrifflängsachse und Halteschiene (15) auf. Um zu erreichen, daß das Leuchtengehäuse (1) im an einer Halteschiene (15) in vertikaler Ausrichtung des Handgriffes (2) befestigten Zustand nicht nur nach vorne und oben strahlen kann, sondern auch nach unten, ohne daß das elektrische Verbindungskabel im Gelenk (5) übermässig geknickt wird, ist erfindungsgemäß an dem Handgriff (2) eine weitere Befestigungsvorrichtung (16) in einer von der erstgenannten Winkelstellung unterschiedlichen zweiten Winkelstellung vorgesehen. Damit ist der Ausleuchtbereich der Handleuchte auf 180° vergrössert (Fig. 1).

Fig.1

BAD ORIGINAL

- 1 -

## Handleuchte für Film-, Foto- oder Videozwecke

Die Neuerung betrifft eine Handleuchte für Film-, Foto-
oder Videozwecke, mit einem Leuchtengehäuse und mit
einem Handgriff, der an dem Leuchtengehäuse zwischen
einer ersten Schwenkstellung, in der die Strahlachse
des Leuchtengehäuses annähernd senkrecht zu der Handgrifflängsachse steht, und einer zweiten Schwenkstellung,
in der die Strahlachse annähernd parallel zur Handgrifflängsachse und vom Handgriff weg gerichtet ist, gelenkig
einstellbar ist, und mit einer am freien Ende des Handgriffs angeordneten Befestigungsvorrichtung zur Befestigung der Handleuchte an einer Halteschiene oder
dgl. in einer bestimmten ersten Winkelstellung zwischen
Handgrifflängsachse und Halteschiene.

Bei den bekannten Handleuchten der vorstehend beschriebenen Art dient der Handgriff zur Handhabung
der Handleuchte, deren Leuchtengehäuse im Betrieb
sehr heiß werden kann. Der Handgriff weist außerdem
die Schalter für die Stromversorgung der Leuchte auf,
führt das elektrische Versorgungskabel in seinem Inneren
zu dem zwischen Leuchtengehäuse und Handgriff vorgesehenen Gelenk und besitzt eine Befestigungsvorrichtung, mittels der die Handleuchte an einer Halteschiene oder dgl., z.B. einer Kamera, befestigt werden kann. Die Befestigungsvorrichtung besteht üblicherweise aus einer im Handgriff unverdrehbar angeordneten Einlegemutter, die eine Klemmfläche für die Halteschiene bildet, sowie einer Schraube, die in die Einlegemutter eingeschraubt ist und mittels der eine zwischen Klemmfläche und Schraube befindliche Halteschiene verklemmt werden kann. Die Befestigungsvorrichtung ist üblicherweise am freien Ende des Haltegriffs so angeordnet, daß die Klemmfläche senkrecht zur Handgrifflängsachse steht.

Das Leuchtengehäuse ist relativ zu dem Handgriff zwischen Anschlägen um etwa $90^{\circ}$ so verschwenkbar, daß in der genannten ersten SChwenkstellung die Strahlrichtung zur Vorderseite des Handgriffs gerichtet ist, während in der genannten zweiten Schwenkstellung die Strahlrichtung parallel zur Handgrifflängsachse und vom Handgriff weg verläuft. Hierdurch ist es möglich, bei der Montage der Handleuchte an einer Halteschiene einer Kamera das Leuchtengehäuse sowohl auf das aufzunehmende Objekt auszurichten als auch nach oben zeigen zu lassen, so daß ein indirekter Beleuchtungseffekt erzielbar ist. Häufig ist es jedoch auch wünschenwert, die Lichtachse zumindest schräg nach unten auszurichten, um auf diese Weise einen besonderen Beleuchtungseffekt des aufzunehmenden Objekts zu erreichen. Bei den herkömmlichen Handleuchten der vorstehend beschriebenen Art ist jedoch eine solche Ausrichtung schräg nach unten oder senkrecht zum Boden nicht möglich, weil das elektrische Versorgungskabel durch das Gelenk zwischen Handgriff und Leuchtengehäuse hindurchgeführt ist und daher zur Sicherung vor einer Beschädigung dieses Kabels der Schwenkbereich des Handgriffes auf $90^{\circ}$ beschränkt sein muß.

Aufgabe der Neuerung ist es daher, auf einfache Weise eine Möglichkeit zu schaffen, den Schwenkbereich des Leuchtengehäuses ohne eine Beschädigungsgefahr für das elektrische Versorgungskabel zu erweitern.

Neuerungsgemäß wird dies dadurch erreicht, daß an dem Handgriff eine weitere Befestigungsvorrichtung zur Befestigung der Handleuchte an einer Halteschiene oder dgl. in einer von der genannten ersten Winkelstellung unterschiedlichen zweiten Winkelstellung vorgesehen ist.

Die weitere Befestigungsvorrichtung, die zweckmässigerweise gleichartig mit der ersten Befestigungsvorrichtung am freien Ende des Handgriffs ist, ermöglicht es, den Handgriff in einer veränderten Winkelstellung an einer Halteschiene oder dgl. zu befestigen, so daß damit auch der 90$^O$-Schwenkbereich des Leuchtengehäuses relativ zur Halteschiene verstellbar ist. Die weitere Befestigungsvorrichtung befindet sich dabei an einer solchen Stelle des Handgriffes, daß in dem mit der Halteschiene verbundenen Zustand der Schwenkbereich des Leuchtengehäuses relativ zum Handgriff in Aufnahmerichtung nach vorne versetzt ist, so daß die erwünschte Einstellung der Lichtachse schräg nach unten oder senkrecht zum Boden möglich ist. Vorteilhafterweise sitzt diese zusätzliche Befestigungsvorrichtung an der in der ersten Schwenkstellung des Handgriffes relativ zum Leuchtengehäuse in Lichtachsenrichtung zeigenden Vorderseite des Handgriffes und zwar in der Nähe des Gelenks. Auf diese Weise stört die zusätzliche Befestigungsvorrichtung die Handhabung und das Erfassen des Handgriffes nicht und der Handgriff muß nicht oder nur unwesentlich länger als die bekannten Handgriffe sein. Außerdem befindet sich der Schwerpunkt des Leuchtengehäuses in der Schwenkstellung, in der die Strahl-oder Lichtachse parallel zur Handgrifflängsachse weist, dann angenähert über der Befestigungsstelle, so daß die Aufnahmesicherheit beeinträchtigende Kippmomente vermieden werden.

Weitere Vorteile und Merkmale der vorliegenden Neuerung ergeben sich aus der nachfolgenden Beschreibung eines bevorzugten Ausführungsbeispiels anhand der beiliegenden Zeichnungen. In den Zeichnungen zeigen:

Fig. 1 eine Handleuchte nach der Neuerung im Zustand der Befestigung an einer Halteschiene mittels der am freien Handgriffende vorgesehenen Befestigungsvorrichtung, und

Fig. 2 die Handleuchte gemäß Fig. 1 im Zustand der Befestigung an einer Halteschiene mittels der weiteren Befestigungsvorrichtung.

Die in den Zeichnungen dargestellte Handleuchte besteht im wesentlichen aus einem Leuchtengehäuse 1, das eine nicht gezeigte elektrische Glühlampe mit zugehörigem Reflektor aufnimmt, sowie aus einem im Ganzen mit 2 bezeichneten Handgriff, dessen vordere Längsseite zur Anpassung an die Finger der Griffhand Einbuchtungen 3 aufweist. Das Leuchtengehäuse 1 besitzt einen Fortsatz 4, über den es mittels eines nur angedeuteten Gelenks 5 in einer Ausnehmung 6 mit dem Handgriff 2 verschwenkbar verbunden ist. Vorzugsweise ist die Reibung in dem Gelenk, z.B. durch eine Klemmung, so eingestellt, daß das Leuchtengehäuse in dem durch die Wandungen der Ausnehmung 6 bestimmten $90^{\circ}$-Schwenkbereich in beliebige Winkelstellungen einstellbar ist.

Mit 8 sind an der Seitenfläche des Handgriffs 2 angeordnete Schalter zur Steuerung der Stromzufuhr angedeutet.

An dem dem Leuchtengehäuse 1 abgewendeten freien Ende des Handgriffes 2 ist eine Ausnehmung 1o eingeformt, die einen Befestigungsboden mit einer in den Handgriff eingebetteten nicht gezeigten Einlegemutter bildet. Der Befestigungsboden stellt eine Klemmfläche 12 dar. In die Einlegemutter ist eine Rändelschraube 13 einschraubbar, so daß eine zwischen einen Ansatz 14 der Rändelschraube 13 und die Klemmfläche 12 eingeschobene Halteschiene 15, z.B. einer Kamera, festgeklemmt und damit die Handleuchte/mit der Halteschiene 15 verbunden werden kann. Insoweit entspricht die Ausgestaltung der Handleuchte derjenigen der bekannten Handleuchten dieser Art.

Neuerungsgemäß ist nun bei dem gezeigten Ausführungsbeispiel eine weitere Befestigungsvorrichtung 16 an dem Handgriff 2 vorgesehen. Diese Befestigungsvorrichtung weist ebenfalls eine nicht gesondert gezeigte Einlegemutter 17 auf, die geringfügig über die Vorderseite des Handgriffes 2 vorsteht und eine Klemmfläche 18 bildet. In die Klemmfläche 18 ist, wie aus Fig. 2 hervorgeht, ebenfalls die Rändelschraube 13 so einschraubbar, daß die Handleuchte an der Halteschiene 15 festgeklemmt werden kann.

Die weitere Befestigungsvorrichtung 16 ist, wie aus den Zeichnungen hervorgeht, an dem dem Leuchtengehäuse 1 zugewendeten Ende des Handgriffes 2 angeordnet. Dadurch beeinträchtigt sie die Handhabung und das Erfassen des Handgriffes 2 nicht. Außerdem liegt in der aus Fig. 2 ersichtlichen Schwenkstellung des Leuchtengehäuses 1 dessen Schwerpunkt angenähert über der Halteschiene 15, so daß Kippmomente gering gehalten werden können.

Wie sich aus dem Vergleich der Fig. 1 und 2 anschaulich entnehmen lässt, ermöglicht die Anordnung der weiteren Befestigungsvorrichtung 16 eine Vergrösserung des Schwenkbereiches des Leuchtengehäuses 1 auf insgesamt 180$^{\circ}$, d.h. um 9o$^{\circ}$ zusätzlich in Richtung eines mittels der nicht gezeigten Kamera zu fotografierenden Objektes. Daher kann ausgehend von der aus Fig. 2 ersichtlichen Stellung das Leuchtengehäuse 1 mit der Lichtachse schräg nach unten bis senkrecht zum Boden eingestellt werden.

BAD ORIGINAL

BAD ORIGINAL

Patentansprüche

1. Handleuchte für Film-,Foto- oder Videozwecke, mit einem Leuchtengehäuse und mit einem Handgriff, der an dem Leuchtengehäuse zwischen einer ersten Schwenkstellung, in der die Strahlachse des Leuchtengehäuses annähernd senkrecht zur Handgrifflängsachse steht, und einer zweiten Schwenkstellung, in der die Strahlachse annähernd parallel zur Handgrifflängsachse und vom Handgriff weg gerichtet ist, gelenkig einstellbar ist, und mit einer am freien Ende des Handgriffs angeordneten Befestigungsvorrichtung zur Befestigung der Handleuchte an einer Halteschiene oder dgl. in einer bestimmten ersten Winkelstellung zwischen Handgrifflängsachse und Halteschiene, dadurch gekennzeichnet, daß an dem Handgriff (2) eine weitere Befestigungsvorrichtung (16) zur Befestigung der Handleuchte an einer Halteschiene (15) oder dgl. in einer von der ersten Winkelstellung unterschiedlichen zweiten Winkelstellung vorgesehen ist.

2. Handleuchte nach Anspruch 1, dadurch gekennzeichnet, daß die erste und die zweite Winkelstellung durch je eine Klemmfläche (12 bzw. 18) an dem Handgriff (2) im Bereich der zugeordneten Befestigungsvorrichtung bestimmt sind, und die Klemmflächen (12, 18) um etwa $90°$ zueinander

versetzt an dem Handgriff (2) angeordnet sind.

3. Handleuchte nach Anspruch 1 oder 2 mit einer in der ersten Schwenkstellung des Handgriffs in Strahlrichtung weisenden Vorderseite des Handgriffes, dadurch gekennzeichnet, daß die weitere Befestigungsvorrichtung (16) an der Vorderseite des Handgriffs (2) vorgesehen ist.

Fig.1